Europäisches Patentamt

(19) European Patent Office

Office européen des brevets

(11) Publication number: **0 030 625**
A2

## (12) EUROPEAN PATENT APPLICATION

(21) Application number: **80107023.6**

(22) Date of filing: **14.11.80**

(51) Int. Cl.³: **G 11 B 5/14**
**G 11 B 5/42, G 11 B 5/60**

(30) Priority: **17.12.79 US 103968**

(43) Date of publication of application:
**24.06.81 Bulletin 81/25**

(84) Designated Contracting States:
**DE FR GB**

(71) Applicant: **International Business Machines
Corporation**

**Armonk, N.Y. 10504(US)**

(72) Inventor: **Argumedo, Armando Jesus
8360 E. Avenida de las Pampas
Tucson Arizona 85710(US)**

(72) Inventor: **Brock, George William
27472 Altamount Road
Los Altos Hills California 94022(US)**

(72) Inventor: **Losee, Paul Dee
10206 Placita Cresta Feliz
Tucson Arizona 85715(US)**

(74) Representative: **Richards, John Peter
IBM UNITED KINGDOM PATENT OPERATIONS Hursley
Park
Winchester Hants, SO21 2JN(GB)**

(54) **Ferrite core magnetic head assembly.**

(57) A magnetic head assembly includes a ferrite core (10) sandwiched between two ceramic layers (12, 14). Alumina films (11, 13, 15, 17) are deposited by sputtering on the sides of the ferrite core and on the ceramic layers in one embodiment, and on the ferrite core only in another embodiment, which are then bonded to form an integral head assembly. Slots (20, 22, 24, 26) to provide flying height control are formed in the air bearing surface of the ceramic layers. The process of making the assembly includes the steps of sputter etching the ferrite and ceramic prior to the deposition of the alumina.

FIG.1

EP 0 030 625 A2

FERRITE CORE MAGNETIC HEAD ASSEMBLY

This invention relates to a magnetic head assembly having a ferrite core.

Magnetic head assemblies which incorporate ferrite cores are widely used in data processing systems. Ferrite is known to be brittle and therefore, during initial machining and shaping and also during subsequent use in conjunction with a magnetic record medium, ferrite edges and corners are chipped away and eroded. As the ferrite cores are made smaller and narrower to increase data track density, the chipping and erosion problem increases. Throughput and usage life decrease, thereby adding significantly to costs of production and maintenance.

Ferrite cores have been assembled with ceramic supports or glass layers to add structural strength. However, the problem of edge erosion, particularly with very narrow core structures, still persists.

An object of this invention is therefore to provide a magnetic ferrite head assembly which has longer wear life and is less subject to core erosion and deterioration.

Accordingly, the present invention provides a magnetic head assembly comprising a narrow flat ferrite core having a transducing gap extending transversely across the width of the core at one edge, and first and second ceramic support structures bonded respectively to opposite sides of the core in a sandwich configuration, characterized in that each side of the core has a film of alumina bonded directly thereto and the ceramic structures are bonded to the alumina films.

- 2 -

The alumina films add substantially to the erosion resistance of the ferrite material, and thus provide a longer life to the assembly.

Preferably, the alumina films are formed by sputter depositing alumina on the sides of the core after these sides have been subjected to non-mechanical etching. The non-mechanical etching provides a microscopically rough surface to the sides of the core which permits "keying in" of the subsequently deposited alumina films for intimate bonding and maximum strength. In the embodiment of the invention alumina films are also applied in a similar manner to the sides of the ceramic structures, further increasing the wear resistance.

Embodiments of the invention will now be described, by way of example, with reference to the accompanying drawings, wherein :-

FIGURE 1 is an exploded view of an embodiment of a magnetic head slider assembly made in accordance with this invention;

FIGURE 2 is a side view, partly broken away, illustrating the layers of material used in the slider assembly;

FIGURE 3 is a representational end view of an alternative configuration of the air bearing surface; and

FIGURE 4 is a representational end view delineating the air bearing surface of the slider assembly of Figs. 1 and 2.

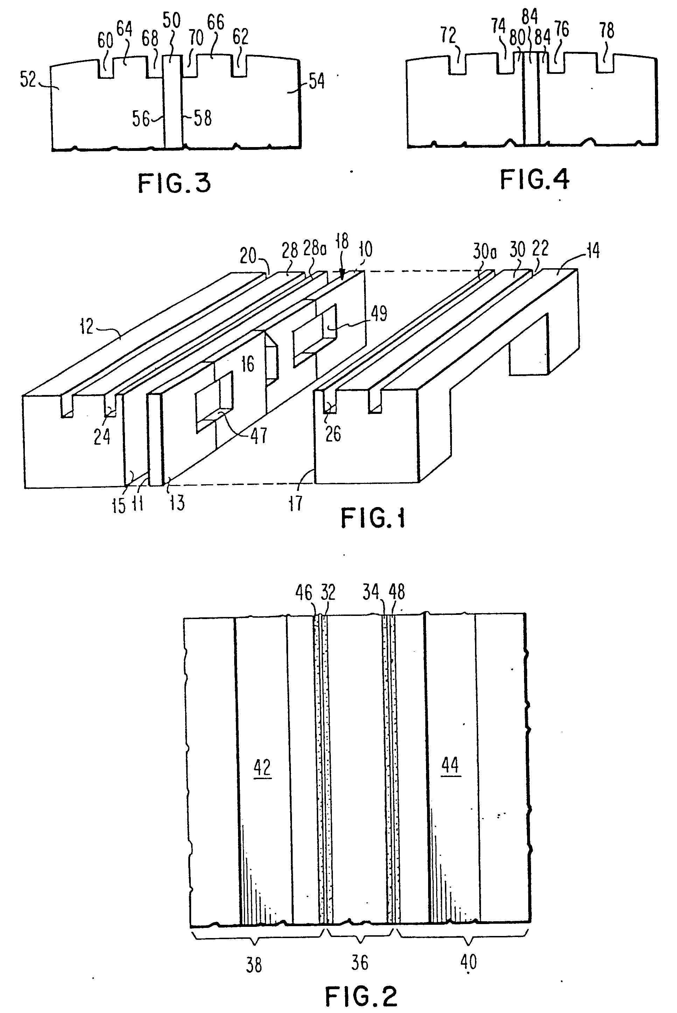

With reference to FIG. 1, a magnetic head slider assembly includes a narrow flat ferrite core 10, which is sandwiched between two configured ceramic support slabs 12 and 14. The ferrite core has a transducing gap 16 extending transversely across the width of the core at one edge. The assembly is formed with an air bearing surface 18. The ceramic slabs 12 and 14, which may be formed from barium titanate, each have a pair of slotted portions 20, 24 and 22, 26 respectively formed at the air bearing surface 18. The slotted portions bound respective rails 28, 28a and 30, 30a to provide a configuration that affords relatively close flying height of the head slider assembly and the transducing gap relative to a moving magnetic medium.

The ferrite core 10 has alumina films 11 and 13 sputter deposited directly on each side and each ceramic slab 12 and 14 has an alumina film 15 and 17 respectively sputter deposited directly on the side which is to be bonded to the ferrite core to form a sandwich configuration. The insulating films of alumina, which is a very hard material, provide strength to the brittle ferrite material of the core 10, so that chipping and erosion do not occur or are substantially reduced during operation of the head slider assembly with relation to a moving magnetic medium, which may be a magnetic tape.

To manufacture the above magnetic head slider assembly, two blocks of ferrite are joined by glass bonding and sliced into sections having a thickness of between 10 to 15 mils. Each sliced section is ground and lapped into a ferrite core structure 10 having a thickness of about 5 mils.

The sides of each ferrite core are sputter etched, or alternatively ion etched, to clean and remove the stresses induced in the ferrite material by machining and to provide a microscopically rough surface for "keying-in" a subsequently deposited alumina layer. The removal is nonmechanical, so as not to introduce additional stresses in the ferrite grain material.

- 4 -

After cleaning and sputter etching, films of alumina 32 and 34 (FIG. 2) are sputter deposited on the sides of the ferrite core 36. The thicknesses of these layers may be 50 to 200 microinches, for example. The sputter depositing of the alumina films 32 and 34 is carried out under deposition conditions which promote low residual stress in the films and they provide a protective structural support adjacent to the ferrite core 36.

Thereafter, supporting side ceramic structures 38,40 of barium titanate are prepared. The barium titanate structures, after being configured by mechanical machining to form slots 42, 44, are ground and lapped on one side, and then sputter etched to remove stresses in the machined material and to clean the surfaces of the structures. Films of alumina 46, 48 are then sputter deposited respectively on one side of each of the two barium titanate structures. The alumina films 32, 46 and 34, 48 are then bonded with a low temperature glass by diffusion or with an epoxy, thereby joining the ceramic side structures and the ferrite core to form a sandwich configuration. The top surface of the sandwich assembly is then lapped to provide a desired air bearing contoured surface, which may be spherical or cylindrical.

After forming the sandwich head assembly, an electrical coil is wound about the head through the apertures 47,49 in the ferrite core, in a well-known manner.

FIGS. 3 and 4 depict partial end views of different air bearing surface configurations which may be used. In FIG. 3, the centred ferrite core 50 is encompassed by a ceramic support 52 on one side and a similar ceramic support 54 on the other side. The ceramic supports are joined to the ferrite core at the alumina films 56, 58 which are bonded as described heretofore. The ceramic structures have slots 60, 62 and rails 64, 66 and stepped portions 68, 70 along the air bearing surface.

In FIG. 4, which corresponds to Figs. 1 and 2, the ceramic structures have slotted portions 72, 74, 76, 78 along the air bearing surface with supporting sections 80, 82 adjacent to the ferrite core 84, as opposed to the free edges of the core shown in FIG. 3. The physical differences in the configurations cause a difference in the flying heights of the head slider assemblies. It should be understood that the air bearing surface may have various numbers and arrangements of slots and rails to achieve a desired air bearing pressure distribution and to achieve a desired flying height.

CLAIMS

1. A magnetic head assembly comprising a narrow flat ferrite core (10) having a transducing gap (16) extending transversely across the width of the core at one edge, and first and second ceramic support structures (12, 14) bonded respectively to opposite sides of the core in a sandwich configuration, characterized in that each side of the core (10) has a film of alumina (11, 13) bonded directly thereto and the ceramic structures (12, 14) are bonded to the alumina films.

2. A magnetic head assembly as claimed in Claim 1, wherein the alumina films are formed by sputter depositing alumina on the sides of the core after these sides have been subjected to non-mechanical etching.

3. A magnetic head assembly as claimed in Claim 1, wherein the side of each ceramic structure adjacent the core also has a film of alumina bonded directly thereto, the alumina film on each ceramic structure being bonded to a respective alumina film on the core.

4. A magnetic head assembly as claimed in Claim 3, wherein the alumina films are formed by sputter depositing alumina on the sides of the core and ceramic structures after these sides have been subjected to non-mechanical etching.

5. A magnetic head assembly as claimed in Claim 3 or 4, wherein the alumina films are bonded with a low temperature glass.

6. A magnetic head assembly as claimed in any preceding Claim, wherein the assembly has a contoured air bearing surface containing the transducer gap.

7.    A magnetic head assembly as claimed in Claim 6, wherein said air bearing surface comprises slotted portions in the ceramic structures.

8.    A magnetic head assembly as in claimed in any preceding Claim, wherein the ceramic structures comprise barium titanate.

1/1

FIG.3

FIG.4

FIG.1

FIG.2